# EUROPEAN PATENT APPLICATION

(11) **EP 2 584 638 A1**
(43) Date of publication of application: **24.04.2013**
(21) Application number: 11795403.2
(22) Date of filing: 14.06.2011
(51) Int. Cl.: H01M 8/06, C01B 3/38, C01B 3/52, H01M 8/04, H01M 8/10

(54) **METHOD FOR OPERATION OF FUEL CELL SYSTEM**

(30) Priority: 15.06.2010 JP 2010135718
(71) Applicant: Panasonic Corporation, Kadoma-shi Osaka 571-8501 (JP)
(72) Inventor: YUKIMASA, Akinori, Osaka 540-6207 (JP); TAGUCHI, Kiyoshi, Osaka 540-6207 (JP); UKAI, Kunihiro, Osaka 540-6207 (JP)
(74) Representative: Grünecker, Kinkeldey, Stockmair & Schwanhäusser
(86) International application number: PCT/JP2011/003380
(87) International publication number: WO 2011/158495

(57) **Abstract**

A method of operating a fuel cell system (100) comprises the steps of: generating a hydrogen-containing gas from a gas containing at least one of a nitrogen gas and a nitrogen compound, by a hydrogen generator (2); removing ammonia from the hydrogen-containing gas; detecting a temperature of the hydrogen-containing gas from which the ammonia has been removed; and starting supplying of the hydrogen-containing gas from the hydrogen generator (2) to the fuel cell (7), when the detected temperature of the hydrogen-containing gas is equal to or higher than a predetermined threshold.

## Description

### Technical Field

The present invention relates to an operation method of a fuel cell system. More particularly, the present invention relates to an operation method of a fuel cell system including a bypass passage via which a hydrogen generator and a combustor are communicated with each other by bypassing a fuel cell.

### Background Art

Conventionally, as a distributed power generation apparatus capable of effectively utilizing energy, a fuel cell cogeneration system (hereinafter referred to as a fuel cell system) having a high power generation efficiency and a high total efficiency has attracted an attention.

This fuel cell system includes a fuel cell as a body of a power generation section. As the fuel cell, there are a phosphoric-acid fuel cell, a molten carbonate fuel cell, a polymer electrolyte fuel cell, a solid oxide fuel cell, etc.. Among these fuel cells, the polymer electrolyte fuel cell is low in an operation temperature in a power generation operation and is suitably applied to the fuel cell system.

The polymer electrolyte fuel cell uses hydrogen as a fuel in the power generation operation. Equipment for supplying the hydrogen is not prepared as a general infrastructure. Therefore, typically, a hydrogen generator is provided together with a fuel cell. The hydrogen generator generates a hydrogen-containing gas used for power generation using a raw material supplied from the existing infrastructure such as a gas pipe coupled to a gas supply facility or a LPG gas cylinder.

The hydrogen generator generates the hydrogen by a steam reforming method which is one of hydrogen generating methods. In this steam reforming method, a hydrocarbon based raw material gas such as a natural gas or a propane gas is mixed with water and then supplied to a reformer including a reforming catalyst. In the reformer, a steam reforming reaction proceeds, and thereby the hydrogen-containing gas containing the hydrogen is generated.

The natural gas which is the raw material from which the hydrogen is generated sometimes contain a nitrogen compound. It is known that during a power generation operation of the fuel cell, if the natural gas containing the nitrogen compound is supplied to the reformer of the hydrogen generator, a chemical reaction between the hydrogen generated through the steam reforming reaction and nitrogen proceeds on the reforming catalyst of the reformer, and thereby ammonia is generated there.

It is known that the ammonia significantly degrades power generation performance of the polymer electrolyte fuel cell. In a case where the natural gas is used as the raw material and ammonia with a high concentration is generated in the power generation operation of the fuel cell system, it is necessary to remove the ammonia from the hydrogen-containing gas generated in the hydrogen generator before the hydrogen-containing gas is supplied to the polymer electrolyte fuel cell.

Patent Literature 1 discloses a fuel cell system in which an ammonia removing device is provided at an upstream side of the polymer electrolyte fuel cell to remove the ammonia from the hydrogen-containing gas, and the hydrogen-containing gas from which the ammonia has been removed is supplied to the polymer electrolyte fuel cell.

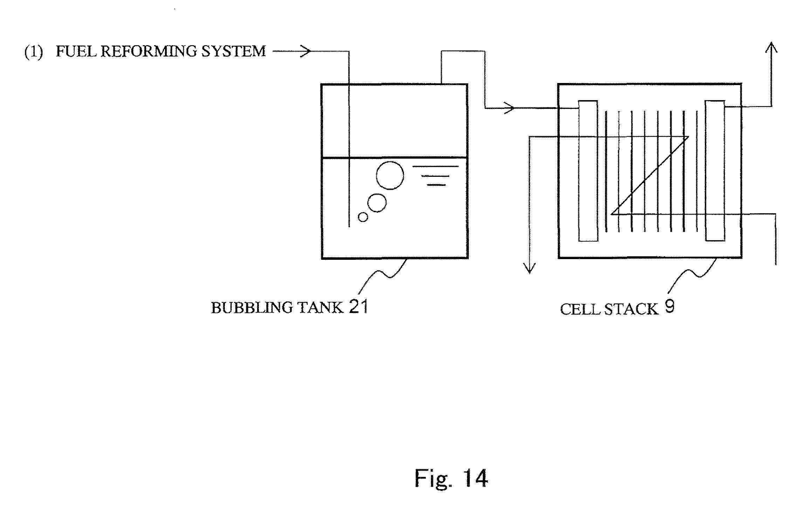

Fig. 14 is a block diagram showing an extracted part of the conventional fuel cell system disclosed in Patent Literature 1. As shown in Fig. 14, a bubbling tank 21 for removing the ammonia is provided, at a portion of a passage through which the hydrogen-containing gas generated in a fuel reforming system 1 is supplied to a cell stack 9. The bubbling tank 21 is configured to store water inside thereof. In the bubbling tank 21, bubbling of the hydrogen-containing gas into water occurs, and thus the ammonia is dissolved into water and removed from the hydrogen-containing gas by gas-liquid contact. The hydrogen-containing gas from which the ammonia has been removed is supplied to the cell stack 9 and used for power generation.

Patent Literature 2 discloses a fuel cell system including a bypass passage via which a hydrogen generator and a combustor are communicated with each other by bypassing a fuel cell.

### Citation Lists

### Patent Literature

Patent Literature 1: Japanese Laid-Open Patent Application Publication No. 2003-31247
Patent Literature 2: Japanese Laid-Open Patent Application Publication No. 2007-254251

### Summary of the Invention

### Technical Problem

However, in the conventional configuration, sufficient study has not been conducted regarding an operation method in a case where an ammonia removing device is provided in a fuel cell system provided with a bypass passage via which a hydrogen generator and a combustor are communicated with each other by bypassing a fuel cell.

The present invention has been developed to solve the above described problems, and an object of the present invention is to optimize an operation method in the case where the ammonia removing device is provided in the fuel cell system provided with the bypass passage.

### Solution to Problem

The present inventors intensively studied the operation method in the case where the ammonia removing device is provided in the fuel cell system provided with the bypass passage via which the hydrogen generator and the combustor are communicated with each other by bypassing the fuel cell, and found out the following.

In the fuel cell system, typically, the hydrogen-containing gas supplied to the fuel cell is adjusted to have a dew point required to obtain electric power from the fuel cell. Typically, the ammonia removing device is configured to remove the ammonia by dissolving the ammonia into liquid water. As a method of dissolving the ammonia into the liquid water, there is a method which causes the hydrogen-containing gas to pass through the liquid water, a method which cools the hydrogen-containing gas and dissolves the ammonia into condensed water, etc.. These methods have a feature in common that the hydrogen-containing gas is cooled by the water.

If a temperature of the hydrogen-containing gas is very low after it has passed through the ammonia removing device, a dew point of the hydrogen-containing gas supplied to the fuel cell is very low, too, which causes a possibility that the electric power cannot be obtained from the fuel cell.

To solve the above stated problem associated with the prior arts, according to the present invention, there is provided a method of operating a fuel cell system, comprising the steps of: generating a hydrogen-containing gas from a gas containing at least one of a nitrogen gas and a nitrogen compound, by a hydrogen generator; removing ammonia from the hydrogen-containing gas; detecting a temperature of the hydrogen-containing gas from which the ammonia has been removed; and starting supplying of the hydrogen-containing gas from the hydrogen generator to the fuel cell, when the detected temperature of the hydrogen-containing gas is equal to or higher than a predetermined threshold.

### Advantageous Effects of the Invention

The operation method of the fuel cell system of the present invention has an advantage that sufficient electric power is obtained in power generation in the fuel cell, by using the above described configuration.

### Brief Description of the Drawings

[Fig. 1] Fig. 1 is a block diagram showing an exemplary schematic configuration of a fuel cell system according to Embodiment 1.
[Fig. 2] Fig. 2 is a view showing an exemplary schematic configuration of an ammonia removing device of an absorbing tower type according to Embodiment 1.
[Fig. 3] Fig. 3 is view showing an exemplary schematic configuration of an ammonia removing device of a bubble tower type according to Embodiment 1.
[Fig. 4] Fig. 4 is a flowchart showing an exemplary operation of the fuel cell system according to Embodiment 1, which occurs at start-up.
[Fig. 5] Fig. 5 is a block diagram showing an exemplary schematic configuration of a fuel cell system according to Modified example 1 of Embodiment 1.
[Fig. 6] Fig. 6 is a block diagram showing an exemplary schematic configuration of a fuel cell system according to Modified example 2 of Embodiment 1.
[Fig. 7] Fig. 7 is a block diagram showing an exemplary schematic configuration of a fuel cell system according to Embodiment 2.
[Fig. 8] Fig. 8 is a flowchart showing an exemplary operation of the fuel cell system according to Embodiment 2, which occurs at start-up.
[Fig. 9] Fig. 9 is a block diagram showing an exemplary schematic configuration of a fuel cell system according to Modified example 1 of Embodiment 2.
[Fig. 10] Fig. 10 is a block diagram showing an exemplary schematic configuration of a fuel cell system according to Modified example 2 of Embodiment 2.
[Fig. 11] Fig. 11 is a block diagram showing an exemplary schematic configuration of a fuel cell system according to Embodiment 3.
[Fig. 12] Fig. 12 is a block diagram showing an exemplary schematic configuration of a fuel cell system according to Modified example 1 of Embodiment 3.
[Fig. 13] Fig. 13 is a block diagram showing an exemplary schematic configuration of a fuel cell system according to Embodiment 4.
[Fig. 14] Fig. 14 is a block diagram showing an extracted portion of a conventional fuel cell system disclosed in Patent Literature 1.

### Description of the Embodiments

Hereinafter, embodiments of the present invention will be described with reference to the drawings.

### (Embodiment 1)

A method of operating a fuel cell system according to Embodiment 1, comprises the steps of: generating a hydrogen-containing gas from a gas containing at least one of a nitrogen gas and a nitrogen compound, by a hydrogen generator; removing ammonia from the hydrogen-containing gas; detecting a temperature of the hydrogen-containing gas from which the ammonia has been removed; and starting supplying of the hydrogen-containing gas from the hydrogen generator to the fuel cell, when the detected temperature of the hydrogen-containing gas is equal to or higher than a predetermined threshold.

In this configuration, a possibility that electric power is not obtained in power generation in the fuel cell can be reduced.

In the method of operating the fuel cell system, the step of removing the ammonia from the hydrogen-containing gas may be a step of causing the hydrogen-containing gas to contact water.

In the method of operating the fuel cell system, the step of removing the ammonia from the hydrogen-containing gas may be a step of flowing the water and the hydrogen-containing gas through a gap formed by a filling material and causing the hydrogen-containing gas and the water to contact each other on a surface of the filling material.

In the method of operating the fuel cell system, the step of removing the ammonia from the hydrogen-containing gas may be a step of bubbling the hydrogen-containing gas in the water stored in a water storage section.

In many cases, a temperature of water stored in the water storage section when start-up of the fuel cell system is starting, is lower than a temperature of the water stored in the water storage section when the fuel cell system is performing a power generation operation. Because of this, the hydrogen-containing gas has a very low temperature when supplying of the hydrogen-containing gas to the fuel cell is starting, which may result in a situation in which the electric power cannot be obtained from the fuel cell. However, with the above configuration, a possibility that the electric power cannot be obtained from the fuel cell is reduced.

In the method of operating the fuel cell system, the step of removing the ammonia from the hydrogen-containing gas may be a step of removing the ammonia from the hydrogen-containing gas flowing through at least one of a branch portion at which a second gas passage connected to a combustor for heating the hydrogen generator branches from a first gas passage via which the hydrogen generator and the fuel cell are communicated with each other, and a portion of the first gas passage which is located between the branch portion and the hydrogen generator.

### [System configuration]

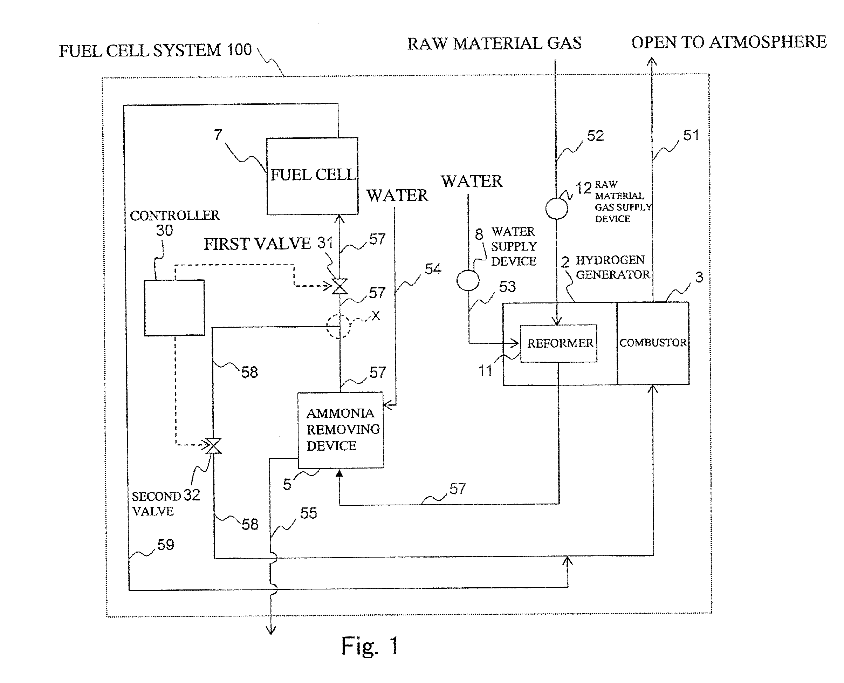

Fig. 1 is a block diagram showing an exemplary schematic configuration of a fuel cell system according to Embodiment 1. Hereinafter, a system configuration of the fuel cell system according to Embodiment 1 will be described with reference to Fig. 1.

As shown in Fig. 1, a fuel cell system 100 of the present embodiment includes a hydrogen generator 2, an ammonia removing device 5, a fuel cell 7 and a controller 30.

The hydrogen generator 2 generates a hydrogen-containing gas using a raw material gas and water. The raw material gas refers to a gas containing hydrocarbon, such as a methane gas or a propane gas, etc.. The hydrogen-containing gas refers to a gas containing H₂ gas. The hydrogen generator 2 includes a reformer 11 having a reforming catalyst which facilitates a steam reforming reaction for generating the hydrogen-containing gas from the raw material gas and water. The hydrogen generator 2 may include a shift converter, a CO removing device, etc., to remove carbon monoxide from the hydrogen-containing gas. In this case, the shift converter or the CO removing device is communicated with the ammonia removing device 5 via a first gas passage 57. The hydrogen generator 2 may include a water evaporator for evaporating water supplied from a water supply device 8.

The ammonia removing device 5 removes the ammonia from the hydrogen-containing gas discharged from the hydrogen generator 2. A detailed configuration of the ammonia removing device 5 will be described later.

The fuel cell 7 generates electric power using the hydrogen-containing gas discharged from the ammonia removing device 5. The fuel cell 7 may be of any type. For example, a polymer electrolyte fuel cell, a solid oxide fuel cell, a phosphoric-acid fuel cell, a molten carbonate fuel cell, etc., may be used as the fuel cell 7.

The controller 30 starts supplying of the hydrogen-containing gas from the hydrogen generator 2 to the fuel cell 7 when a temperature of the hydrogen-containing gas from which the ammonia has been removed is equal to or higher than a predetermined threshold. It is sufficient that the controller 30 has a control function. The controller 30 includes a processor section and a memory section for storing control programs. Examples of the controller 30 may include a microcontroller, a PLC (Programmable Logic Controller), etc.. Examples of the processor section may include MPU, and CPU. Example of the memory section may include a memory. The controller 30 may be configured as a single controller which performs concentrated control or a plurality of controllers which perform distributed control cooperatively with each other.

A combustor 3 heats the hydrogen generator 2. The combustor 3 combusts, for example, a gas discharged from the ammonia removing device 5, an off-gas discharged from the fuel cell 7, etc., to heat the hydrogen generator 2.

A water supply device 8 supplies the water to the hydrogen generator 2. As the water supply device 8, for example, a water pump is used.

A raw material gas supply device 12 supplies the raw material gas to the hydrogen generator 2. As the raw material gas supply device 12, for example, a booster pump is used.

A raw material gas passage 52 is a passage via which a supply source of the raw material gas, for example, the existing infrastructure such as a gas pipe coupled to a gas supply facility or a LPG gas cylinder, and the reformer 11 are communicated with each other. The raw material gas supply device 12 is provided at the raw material gas passage 52.

A reforming water passage 53 is a passage via which a water supply source (e.g., tap water infrastructure) of reforming water and the reformer 11 are communicated with each other. The water supply device 8 is provided at the reforming water passage 53.

A water passage 54 is a passage via which a water supply source of the water used to remove the ammonia, for example, a tap water infrastructure, a water tank, etc., and the ammonia removing device 5 are communicated with each other.

A water discharge passage 55 is a passage through which the water discharged from the ammonia removing device 5 is discharged to outside of the fuel cell system 100.

The first gas passage 57 is a passage via which the reformer 11 and the ammonia removing device 5 are communicated with each other. The gas discharged from the reformer 11 is supplied to the ammonia removing device 5 though the first gas passage 57. In addition, the first gas passage 57 is a passage via which the ammonia removing device 5 and the fuel cell 7 are communicated with each other. In other words, the first gas passage 57 is a gas passage via which the hydrogen generator 2 and the fuel cell 7 are communicated with each other. The first gas passage 57 may include a gas passage provided inside of the ammonia removing device 5.

A second gas passage 58 branches from a branch portion X of the first gas passage 57 which is located between the ammonia removing device 5 and the fuel cell 7. Via the second gas passage 58, the branch portion X and the combustor 3 are communicated with each other. In other words, the second gas passage 58 is a bypass passage via which the hydrogen generator 2 and the combustor 3 are communicated with each other by bypassing the fuel cell 7.

An off-gas passage 59 is a passage via which a gas discharge outlet of an anode side of the fuel cell 7 and the second gas passage 58 are communicated with each other.

A portion of the first gas passage 57 which is located between the branch portion X and the fuel cell 7 is provided with a first valve 31. The second gas passage 58 is provided with a second valve 32. As the first valve 31 and the second valve 32, for example, electromagnetic on-off valves are used.

A combustion exhaust gas passage 51 is open to atmosphere. Through the combustion exhaust gas passage 51, a combustion exhaust gas is discharged from the combustor 3 to outside of the fuel cell system.

Although the second gas passage 58 branches from a portion of the first gas passage 57 which is located downstream of the ammonia removing device 5 in the configuration of Fig. 1, it may extend directly from the ammonia removing device 5. In this case, the second gas passage 58 is connected to the ammonia removing device 5 and thereby indirectly communicated with the first gas passage 57. In other words, the ammonia removing device 5 may be positioned at least either one of the branch portion X and a portion of the first gas passage 57 which is located between the branch portion X and the hydrogen generator 2.

For example, the ammonia removing device 5 may be configured to remove the ammonia from the hydrogen-containing gas in such a manner that the hydrogen-containing gas is caused to contact water and the ammonia contained in the hydrogen-containing gas is absorbed into the water. Specifically, as the ammonia removing device 5, an ammonia removing device of an absorbing tower type, an ammonia removing device of a bubble tower type, an ammonia removing device of a condenser type, etc., are suitably used. These are exemplary. The ammonia removing device 5 may be configured in any way so long as it is capable of removing the ammonia by causing the hydrogen-containing gas to contact the water.

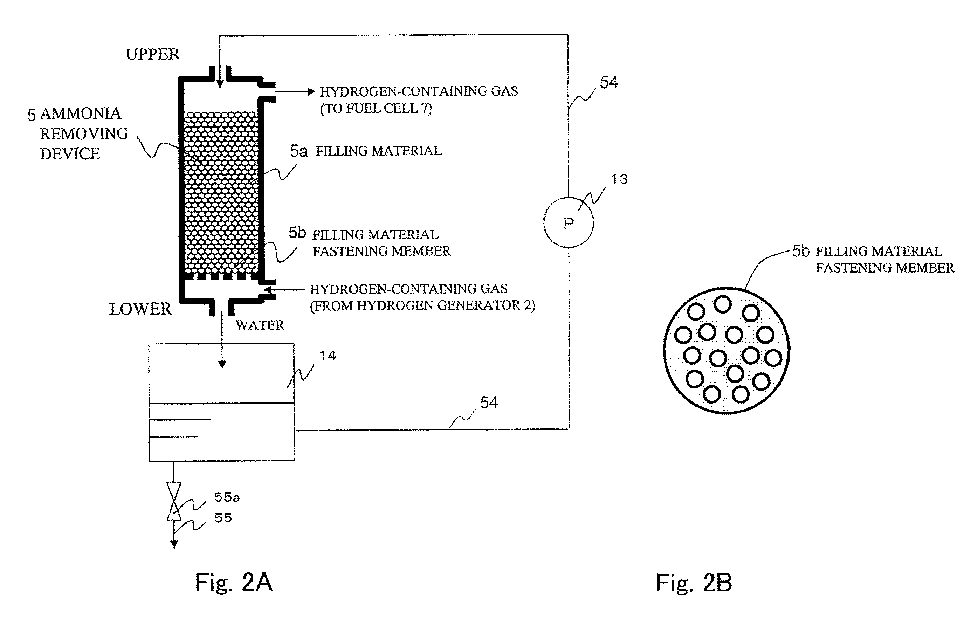

Fig. 2 is a view showing an exemplary schematic configuration of an ammonia removing device of an absorbing tower type of Embodiment 1.

As shown in Fig. 2A, in the case of the ammonia removing device 5 of the absorbing tower type, a filling material 5a (e.g., plastic beads, etc..) is filled inside of the ammonia removing device 5 on and above a filling material fastening member 5b. As shown in Fig. 2B, the filling material fastening member 5b has a number of holes having a smaller diameter than the filling material 5a.

During an operation of the fuel cell system 100, the water from the water passage 54 is supplied through an opening at a top portion of the ammonia removing device 5. The water flows down along a surface of the filling material 5a and is discharged to a water tank 14 through the holes of the filling material fastening member 5b and then through an opening at a bottom portion of the ammonia removing device 5. The hydrogen-containing gas discharged from the hydrogen generator 2 flows through the first gas passage 57 and is supplied to the inside of the ammonia removing device 5 through an opening at a lower portion of the ammonia removing device 5. The hydrogen-containing gas moves up through a gap formed by the filling material 5a and is discharged through an opening at an upper portion of the ammonia removing device 5. The discharged hydrogen-containing gas is supplied to the fuel cell 7 via the first gas passage 57.

In the ammonia removing device of the absorbing tower type, the ammonia is removed from the hydrogen-containing gas in such a manner that the water and the hydrogen-containing gas contact each other on the surface of the filling material 5a, and the ammonia contained in the hydrogen-containing gas is absorbed into the water.

The water tank 14 is a tank which stores the water which has contacted the hydrogen-containing gas in the ammonia removing device 5. The water tank 14 is connected to a water discharge passage 55. By opening a water discharge valve 55a, the water is discharged appropriately from the water tank 14 to outside of the fuel cell system 100.

The water supply device 13 is a device for supplying the water stored in the water tank 14 to the ammonia removing device 5. By operating the water supply device 13, the water inside of the water tank 14 is re-used to remove the ammonia contained in the hydrogen-containing gas. As the water supply device 13, for example, a pump is used.

The water passage 54 may be provided with a water purifier using an ion-exchange resin, or the like. A water supply passage may be connected to the water tank 4 to supply water from outside the fuel cell system.

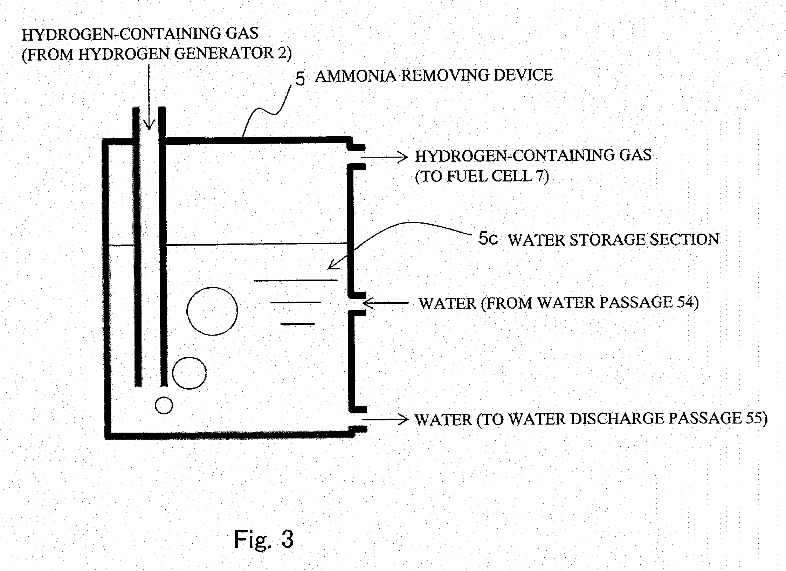

Fig. 3 is a view showing an exemplary schematic configuration of an ammonia removing device of a bubble tower type of Embodiment 1.

As shown in Fig. 3, in the case of the ammonia removing device 5 of the bubble tower type, a water storage section 5c is provided inside of the ammonia removing device 5. The water from the water passage 54 is supplied through an opening at a mid portion of a side surface of the ammonia removing device 5. The water stored in the water storage section 5c is discharged through an opening at a lower portion of the side surface of the ammonia removing device 5. An opening at an upper end surface of the ammonia removing device 5 is communicated with the hydrogen generator 2 via the first gas passage 57. A pipe extends from the opening to a portion near a bottom portion of the water storage section 5c. In the case of using the ammonia removing device of the bubble tower type, the water passage 54 may be directly connected to a tap water infrastructure outside the fuel cell system, or may be configured to supply the water discharged from the ammonia removing device to the ammonia removing device for re-use, as in the example of Fig. 2.

Although not shown in Fig. 3, the water passage 54 is provided with a water supply device and the water discharge passage 55 is provided with a water discharge valve as in the configuration of Fig. 2. The water supply device is actuated at an appropriate timing to supply the water to the ammonia removing device 5, while the water discharge valve is actuated at an appropriate timing to discharge the water from the ammonia removing device 5.

During an operation of the fuel cell system 100, the water is stored in the water storage section 5c, the hydrogen-containing gas is discharged from a lower end of the pipe and is formed into bubbles, which migrate upward in the water (bubbling). The hydrogen-containing gas migrates out from the water, exits through an opening at an upper portion of the side surface of the ammonia removing device 5 and is supplied to the fuel cell 7 via the first gas passage 57.

In the ammonia removing device of the bubble tower type, the ammonia is removed from the hydrogen-containing gas in such a manner that the water and the hydrogen-containing gas contact each other at interfaces of the bubbles formed by the hydrogen-containing gas in the stored water, and the ammonia contained in the hydrogen-containing gas is absorbed into the water.

### [Operation]

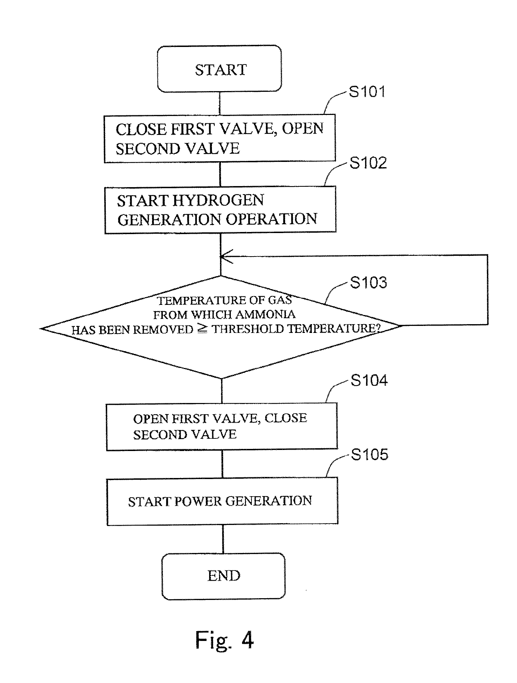

Fig. 4 is a flowchart showing an exemplary operation program of the fuel cell system according to Embodiment 1, which occurs at start-up. The operation program is executed by control performed by the controller 30 (hereinafter the same occurs in modified examples and other embodiments).

When the fuel cell system 100 is started-up (START), the first valve 31 is closed and the second valve 32 is opened (step S101). The raw material gas supply device 12 is actuated to supply the raw material gas to the hydrogen generator 2 (reformer 11). The gas (which is the raw material gas in an initial stage of start-up and is the hydrogen-containing gas with an increase in the temperature of the hydrogen generator 2) which has been discharged from the hydrogen generator 2 (reformer 11), passes through the ammonia removing device 5, and is supplied to the combustor 3 via the second gas passage 58. The combustor 3 combusts the gas to heat the hydrogen generator 2 (reformer 11).

When a temperature of the hydrogen generator 2 has increased to a sufficient level, for example, after a passage of a predetermined period of time, the water is supplied from the water supply device 8 to the hydrogen generator 2 (reformer 11), and the hydrogen generator 2 starts its operation for generating hydrogen (step S102). Thus, the hydrogen generator 2 generates the hydrogen-containing gas from a gas containing at least either one of a nitrogen gas and a nitrogen compound.

With the increase in the temperature of the hydrogen generator 2, a temperature of the gas discharged from the hydrogen generator 2 (reformer 11) increases, too. Since the high-temperature gas flows through inside of the ammonia removing device 5, the temperature of the ammonia removing device 5 increases, too. The hydrogen-containing gas flows through the inside of the ammonia removing device 5, and thereby the ammonia is removed from the hydrogen-containing gas.

After that, the temperature of the hydrogen-containing gas from which the ammonia has been removed is detected, and the fuel cell system 100 is placed in a stand-by state until the detected temperature of the hydrogen-containing gas becomes equal to or higher than a predetermined threshold (NO in step S103). When the detected temperature of the hydrogen-containing gas becomes equal to or higher than the predetermined threshold (YES in step S103), the first valve 31 is opened and the second valve 32 is closed (step S104). Note that the temperature of the hydrogen-containing gas from which the ammonia has been removed may be detected in a direct manner by detecting the temperature of the gas, or in an indirect manner. The temperature of the hydrogen-containing gas from which the ammonia has been removed may be detected in the indirect manner, by detecting the temperature of the reformer 11, or based on a time that passes after the reformer 11 has started generating the hydrogen-containing gas.

The predetermined threshold may be preferably a temperature equal to or higher than a lower limit value of a gas temperature which is required to generate the electric power in the fuel cell. This lower limit value may be defined as a dew point required to obtain electric power from the fuel cell.

The hydrogen-containing gas which has been discharged from the ammonia removing device 5 is supplied to the fuel cell 7 via the first gas passage 57, and the fuel cell 7 starts power generation (STEP S 1 05).

Through the above steps, the start-up operation of the fuel cell system 100 is completed (END).

In accordance with the fuel cell system according to the present embodiment, during a period of time for which the hydrogen-containing gas is supplied to the combustor via the bypass passage (in the present embodiment, second gas passage 58) when the fuel cell system 100 is started-up, the hydrogen-containing gas passing through the ammonia removing device 5 causes the temperature of the ammonia removing device 5 to increase. Therefore, when the power generation in the fuel cell system is starting, the hydrogen-containing gas supplied to the fuel cell contacts the water heated by the hydrogen-containing gas in the ammonia removing device 5, at the start-up. This enables the fuel cell system of the present embodiment to improve an ion conductivity of an electrolyte at the start of power generation as compared to a configuration in which the ammonia removing device is provided in a portion of the first gas passage which is located downstream of the branch portion.

### [Modified example 1]

In an operation method of a fuel cell system of Modified example 1 of Embodiment 1, the step of removing the ammonia from the hydrogen-containing gas is a step of removing the ammonia from the hydrogen-containing gas flowing through the branch portion at which the second gas passage connected to the combustor for heating the hydrogen generator branches from the first gas passage via which the hydrogen generator and the fuel cell are communicated with each other.

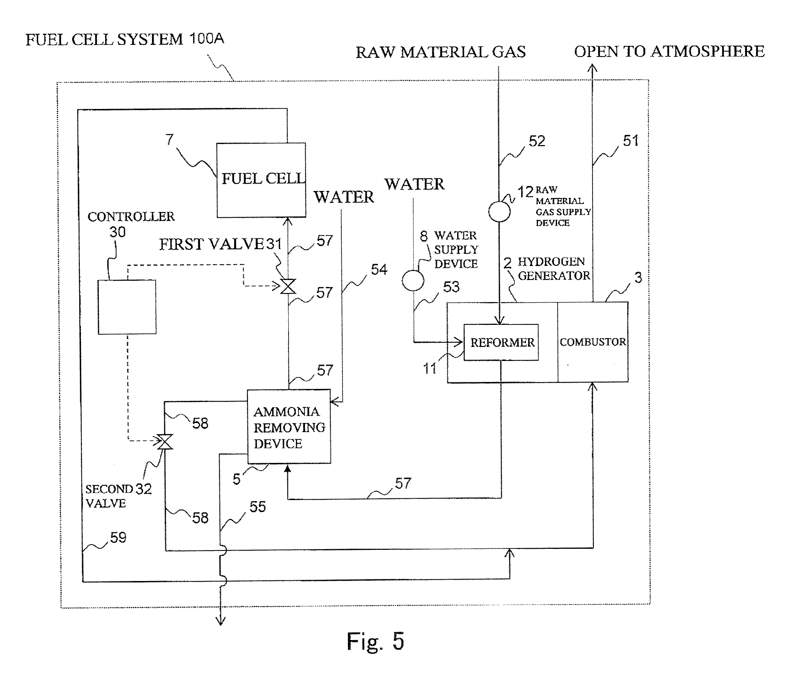

Fig. 5 is a block diagram showing an exemplary schematic configuration of the fuel cell system according to Modified example 1 of Embodiment 1.

An operation method of a fuel cell system 100A of Fig. 5 is different from the operation method of the fuel cell system 100 of Fig. 1 as follows. In the operation method of the fuel cell system 100 of Fig. 1, the ammonia is removed from the hydrogen-containing gas flowing through the portion of the first gas passage which is located between the hydrogen generator and the branch portion at which the second gas passage connected to the combustor for heating the hydrogen generator branches from the first gas passage via which the hydrogen generator and the fuel cell are communicated with each other. On the other hand, in the operation method of the fuel cell system 100A of Fig. 5, the ammonia is removed from the hydrogen-containing gas flowing through the first gas passage in the branch portion at which the second gas passage connected to the combustor for heating the hydrogen generator branches from the first gas passage via which the hydrogen generator and the fuel cell are communicated with each other.

Specifically, as shown in Fig. 5, in the fuel cell system 100A, the ammonia removing device 5 is provided at the branch portion X at which the second gas passage 58 connected to the combustor 3 for heating the hydrogen generator 2 branches from the first gas passage 57 via which the hydrogen generator 2 and the fuel cell 7 are communicated with each other.

The fuel cell system 100A of the present modified example may be identical in configuration to the fuel cell system 100 of Fig. 1 except for the above configuration. Therefore, in Fig. 5, the same components as those of Fig. 1 are identified by the same reference symbols and names and will not be described repetitively.

The fuel cell system 100A of the present modified example operates as shown in Fig. 4 like the fuel cell system 100 of Embodiment 1 and therefore, its operation will not be described repetitively.

### [Modified example 2]

In an operation method of a fuel cell system of Modified example 2 of Embodiment 1, the step of removing the ammonia from the hydrogen-containing gas is a step of removing the ammonia from the hydrogen-containing gas flowing through a portion of the first gas passage which is located between the fuel cell and the branch portion at which the second gas passage connected to the combustor for heating the hydrogen generator branches from the first gas passage via which the hydrogen generator and the fuel cell are communicated with each other.

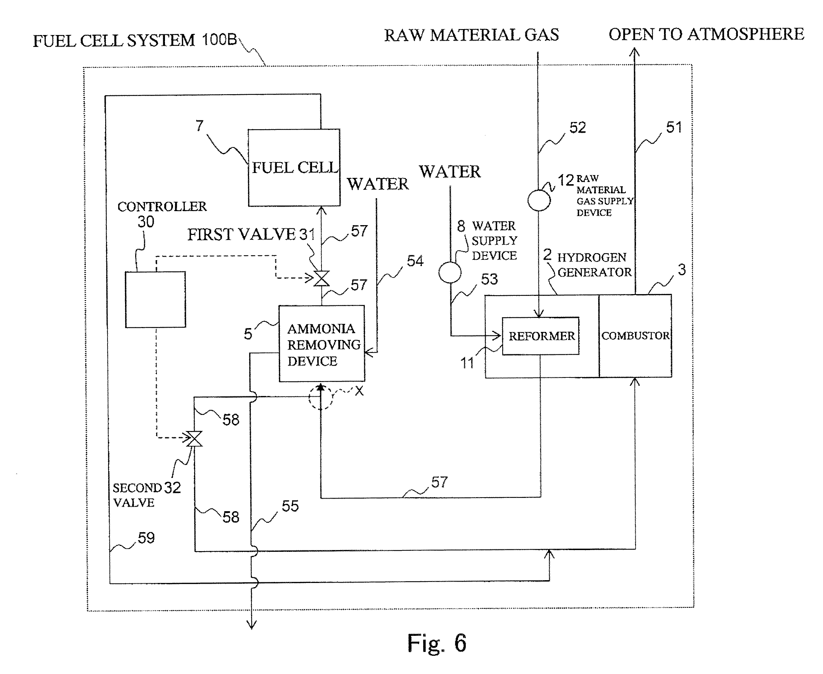

Fig. 6 is a block diagram showing an exemplary schematic configuration of a fuel cell system according to Modified example 2 of Embodiment 1.

An operation method of a fuel cell system 100B of Fig. 6 is different from the operation method of the fuel cell system 100 of Fig. 1 as follows. In the operation method of the fuel cell system 100 of Fig. 1, the ammonia is removed from the hydrogen-containing gas flowing through the portion of the first gas passage which is located between the hydrogen generator and the branch portion at which the second gas passage connected to the combustor for heating the hydrogen generator branches from the first gas passage via which the hydrogen generator and the fuel cell are communicated with each other. On the other hand, in the operation method of the fuel cell system 100B of Fig. 6, the ammonia is removed from the hydrogen-containing gas flowing through the portion of the first gas passage which is located between the fuel cell and the branch portion at which the second gas passage connected to the combustor for heating the hydrogen generator branches from the first gas passage via which the hydrogen generator and the fuel cell are communicated with each other.

Specifically, as shown in Fig. 6, in the fuel cell system 100B, the ammonia removing device 5 is provided between the fuel cell 7 and the branch portion X at which the second gas passage 58 connected to the combustor 3 for heating the hydrogen generator 2 branches from the first gas passage 57 via which the hydrogen generator 2 and the fuel cell 7 are communicated with each other.

The fuel cell system 100B of the present modified example may be identical in configuration to the fuel cell system 100 of Fig. 1 except for the above configuration. Therefore, in Fig. 6, the same components as those of Fig. 1 are identified by the same reference symbols and names and will not be described.

The fuel cell system 100A of the present modified example operates like the fuel cell system 100 of Embodiment 1 as shown in Fig. 4, and its operation will not be described.

Note that in the present modified example, the ammonia removing device 5 is provided between the fuel cell 7 and the branch portion X at which the second gas passage 58 branches from the first gas passage 57, and in this case, the high-temperature hydrogen-containing gas discharged from the reformer 11 does not flow through the ammonia removing device 5 before the first valve 31 is opened.

Therefore, the ammonia removing device 5 is not heated before supplying of the hydrogen-containing gas to the fuel cell 7 starts, and the hydrogen-containing gas in a very low temperature state flows into the fuel cell 7 when supplying of the hydrogen-containing gas to the fuel cell 7 is starting. This may result in a situation in which the electric power cannot be obtained from the fuel cell 7.

To avoid this, preferably, the ammonia removing device 5 is provided with a heater such as an electric heater for heating the ammonia removing device 5, and the heater is configured to heat the ammonia removing device 5 before supplying of the hydrogen-containing gas to the fuel cell 7 starts.

### (Embodiment 2)

In an operation method of a fuel cell system according to Embodiment 2, the step of detecting the temperature of the hydrogen-containing gas from which the ammonia has been removed, in the operation method of the fuel cell system of Embodiment 1, is a step of detecting a temperature of the hydrogen-containing gas flowing through a gas passage located downstream of the ammonia removing device.

The operation method of the fuel cell system of the present embodiment may be identical to any one of the operation methods of the fuel cell systems of Embodiment 1 and modified examples of Embodiment 1.

### [System configuration]

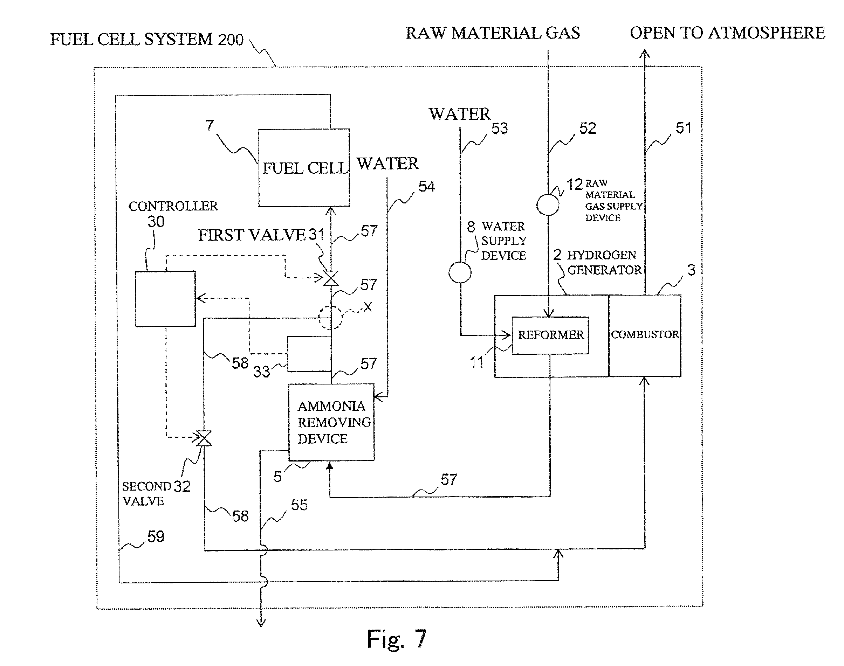

Fig. 7 is a block diagram showing an exemplary schematic configuration of a fuel cell system according to Embodiment 2. Hereinafter, a system configuration of the fuel cell system according to Embodiment 2 will be described with reference to Fig. 7.

As shown in Fig. 7, a fuel cell system 200 of the present embodiment includes a temperature detector 33.

The temperature detector 33 detects the temperature of the hydrogen-containing gas flowing through a portion of the first gas passage 57 which is located downstream of the ammonia removing device 5. The temperature detector 33 is constituted by, for example, a thermocouple, etc., and is provided at a portion of the first gas passage 57 which is located downstream of the ammonia removing device 5. The temperature detector 33 is communicatively connected to the controller 30 and sends a detected gas temperature to the controller 30.

The fuel cell system 200 of the present embodiment may be identical in configuration to the fuel cell system 100 of Fig. 1 except for the above configuration. Therefore, in Fig. 7, the same components as those of Fig. 1 are identified by the same reference symbols and names and will not be described repetitively.

### [Operation]

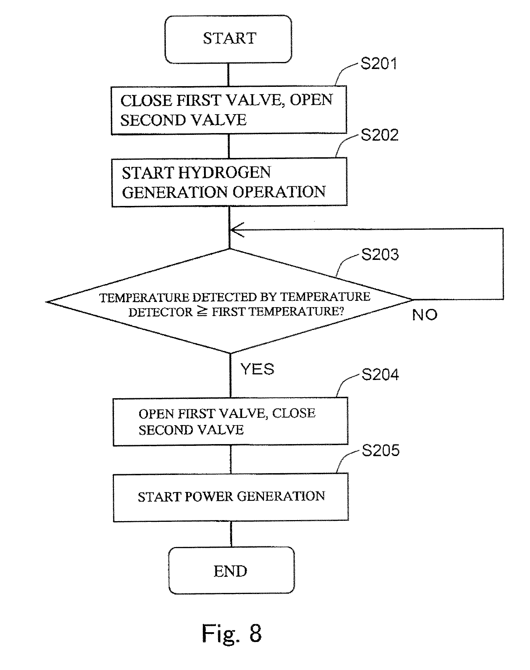

Fig. 8 is a flowchart showing an exemplary operation program of the fuel cell system according to Embodiment 1, which is executed at start-up.

When the fuel cell system 200 is started-up (START), the first valve 31 is closed and the second valve 32 is opened (Step S101). The operation for generating hydrogen starts (step S102). Step S201 and Step S202 are identical to Step 101 and Step S102 in Fig. 4 and will not be described in detail.

After that, the temperature detector 33 detects the temperature of the hydrogen-containing gas flowing through the portion of the first gas passage 57 which is located downstream of the ammonia removing device 5, and the fuel cell system 200 is placed in a stand-by state during a time period that passes before the detected temperature becomes equal to or higher than a first temperature (NO in step S203). When the detected temperature becomes equal to or higher than the threshold (YES in step S203), the first valve 31 is opened and the second valve 32 is closed (step S204).

The hydrogen-containing gas which has been discharged from the ammonia removing device 5 is supplied to the fuel cell 7 via the first gas passage 57, and the fuel cell 7 starts power generation (step S205).

Through the above steps, the start-up operation of the fuel cell system 100 is completed (END).

In the present embodiment, the temperature detector 33 detects the temperature of the hydrogen-containing gas from which the ammonia has been removed. Therefore, after for example, increasing of the temperature of the ammonia removing device 5 is completed and it is confirmed that the hydrogen-containing gas having a temperature suitable to be supplied from the hydrogen generator 2 to the fuel cell 7 is discharged stably from the ammonia removing device 5, the power generation in the fuel cell starts. Therefore, in the present embodiment, a humidified state of the hydrogen-containing gas at start of the power generation in the fuel cell system can be made more appropriate.

### [Modified example 1]

In an operation method of a fuel cell system of Modified example 1 of Embodiment 2, the step of detecting the temperature of the hydrogen-containing gas from which the ammonia has been removed is a step of detecting a temperature of the ammonia removing device.

The operation method of the fuel cell system of the present modified example may be identical to any one of the operation methods of the fuel cell systems of Embodiment 1, modified examples of Embodiment 1, and Embodiment 2 except for the above feature.

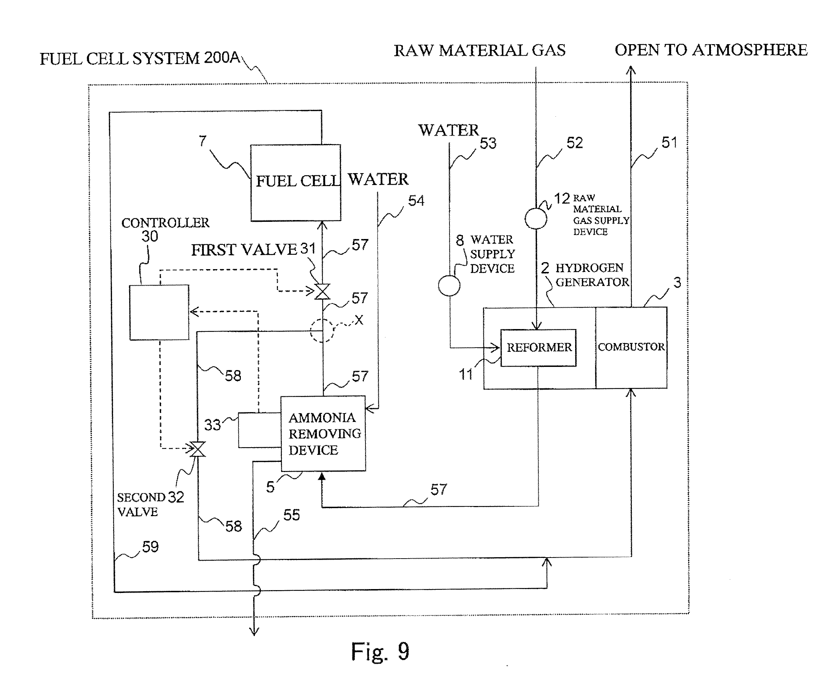

Fig. 9 is a block diagram showing an exemplary schematic configuration of a fuel cell system according to Modified example 1 of Embodiment 2.

The temperature detector 33 detects the temperature of the ammonia removing device 5. The temperature detector 33 is constituted by, for example, a thermocouple, etc., and is provided at the ammonia removing device 5. The temperature detector 33 is communicatively connected to the controller 30 and sends a detected temperature of the ammonia removing device 5 to the controller 30.

The fuel cell system 200A of the present modified example may be identical in configuration to the fuel cell system 200 of Fig. 7 except for the above configuration. Therefore, in Fig. 9, the same components as those of Fig. 7 are identified by the same reference symbols and names and will not be described repetitively.

The operation at start-up of the fuel cell system 200A of the present modified example may be identical to the operation at the start-up of the fuel cell system 200 except that in Fig. 8, the step of detecting the temperature of the hydrogen-containing gas from which the ammonia has been removed in Step S203 is the step of detecting the temperature of the ammonia removing device 5 by using the temperature detector 33. Therefore, the operation at start-up of the fuel cell system 200A will not be described in detail repetitively.

In the present modified example, the temperature detector 33 detects the temperature of the ammonia removing device 5. Therefore, after for example, increasing of the temperature of the ammonia removing device 5 is completed and it is confirmed that the hydrogen-containing gas having a temperature suitable to be supplied from the hydrogen generator 2 to the fuel cell 7 is discharged stably from the ammonia removing device 5, the power generation in the fuel cell starts. Therefore, in the present embodiment, a humidified state of the hydrogen-containing gas at start of the power generation in the fuel cell system can be made more appropriate.

### [Modified example 2]

In an operation method of a fuel cell system according to Modified example 2 of Embodiment 2, the step of detecting the temperature of the hydrogen-containing gas from which the ammonia has been removed in the operation method of the fuel cell system of Modified example 2 of Embodiment 1 is a step of detecting a temperature of the ammonia removing device.

The operation method of the fuel cell system of the present modified example may be identical to any one of the fuel cell systems of Embodiment 1, modified examples of Embodiment 1, and Embodiment 2, except for the above feature.

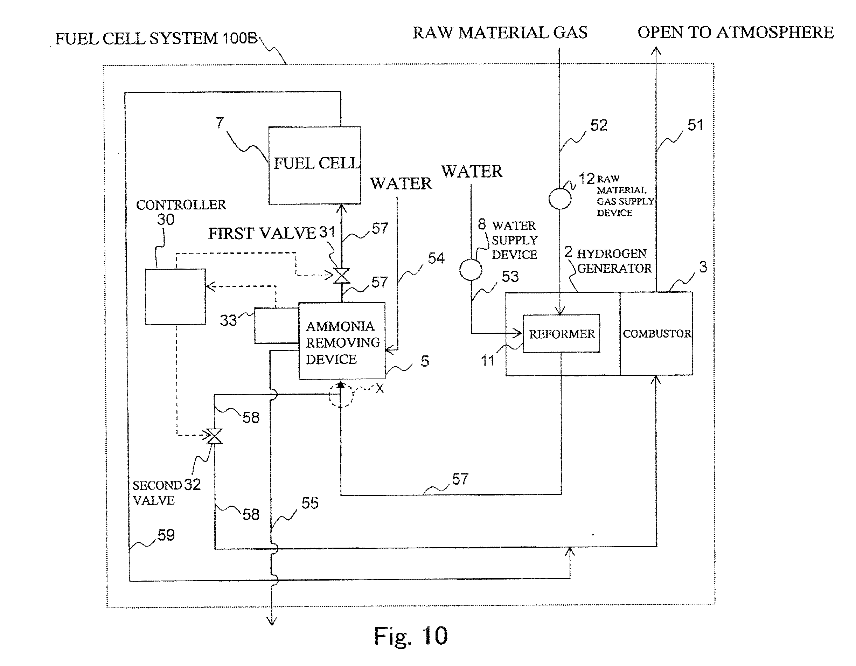

Fig. 10 is a block diagram showing an exemplary schematic configuration of the fuel cell system according to Modified example 2 of Embodiment 2.

The temperature detector 33 detects the temperature of the ammonia removing device 5. The temperature detector 33 is constituted by, for example, a thermocouple, etc., and is provided at the ammonia removing device 5. The temperature detector 33 is communicatively connected to the controller 30 and sends a detected temperature of the ammonia removing device 5 to the controller 30.

The fuel cell system 200B of the present modified example may be identical in configuration to the fuel cell system 100B of Fig. 6 except for the above configuration. Therefore, in Fig. 10, the same components as those of Fig. 6 are identified by the same reference symbols and names and will not be described repetitively.

The operation at start-up of the fuel cell system 200B of the present modified example may be identical to the operation at the start-up of the fuel cell system 200A according to Modified example 1 of Embodiment 2. Therefore, the operation at start-up of the fuel cell system 200B will not be described in detail repetitively.

Like Modified example 2 of Embodiment 1, in the present modified example, the ammonia removing device 5 is preferably provided with a heater such as an electric heater for heating the ammonia removing device 5.

In the present modified example, the temperature detector 33 detects the temperature of the ammonia removing device 5. Therefore, after for example, increasing of the temperature of the ammonia removing device 5 is completed and it is confirmed the hydrogen-containing gas having a temperature suitable to be supplied from the hydrogen generator 2 to the fuel cell 7 is discharged stably from the ammonia removing device 5, the power generation in the fuel cell starts. Therefore, in the present embodiment, a humidified state of the hydrogen-containing gas at start of the power generation in the fuel cell system can be made more appropriate. This reduces a possibility that the electric power is not obtained when the power generation in the fuel cell system is starting.

### (Embodiment 3)

An operation method of a fuel cell system according to Embodiment 3 includes a step of heating the water inside of the ammonia removing device before supplying of the hydrogen-containing gas from the hydrogen generator to the fuel cell starts in the operation method of the fuel cell system according to at least one of Embodiment 1 and Embodiment 2.

In accordance with this configuration, a humidified state of the hydrogen-containing gas at start of the power generation in the fuel cell system can be further improved, as compared to a case where the operation method does not include the step of heating the water inside of the ammonia removing device before supplying of the hydrogen-containing gas starts.

In the above operation method of the fuel cell system, the step of heating the water inside of the ammonia removing device may be the step of heating the water inside of the ammonia removing device by the heater provided at the ammonia removing device.

The operation method of the fuel cell system of the present embodiment may be identical to any one of the operation methods of the fuel cell systems of Embodiment 1, modified examples of Embodiment 1, Embodiment 2 and modified examples of Embodiment 2, except for the above feature.

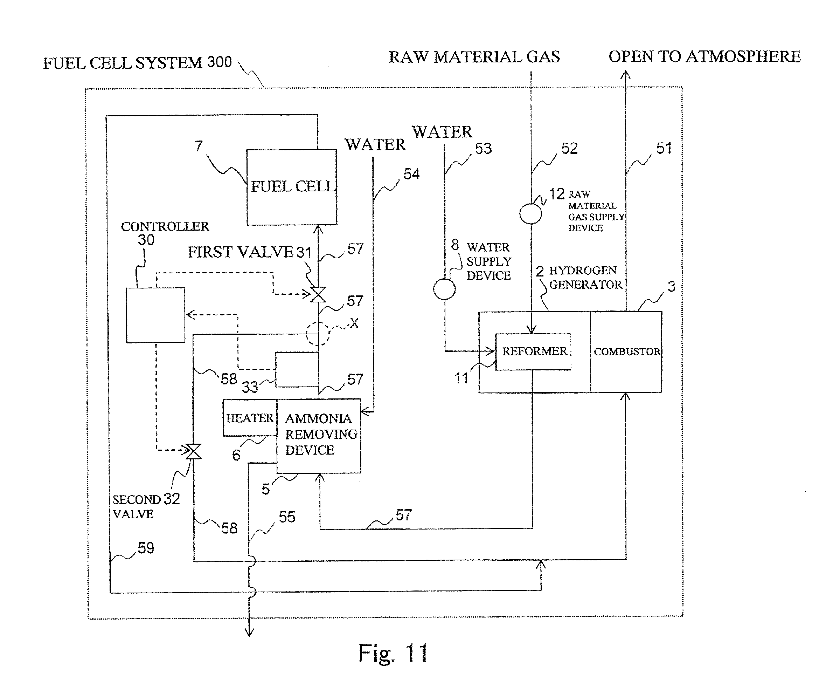

Fig. 11 is a block diagram showing an exemplary schematic configuration of a fuel cell system according to Embodiment 3. Hereinafter, a system configuration of the fuel cell system of Embodiment 3 will be described with reference to Fig. 11.

As shown in Fig. 11, a fuel cell system 300 of the present embodiment includes the heater 6.

The heater 6 is provided at the ammonia removing device 5 to heat the water inside of the ammonia removing device 5. The heater 6 is constituted by, for example, an electric heater connected to an outside electric power supply, etc.. The heater 6 may be communicatively connected to the controller 30 and controlled by the controller 30.

The fuel cell system 300 of the present embodiment may be identical in configuration to the fuel cell system 200 of Fig. 7 except for the above configuration. Therefore, in Fig. 11, the same components as those of Fig. 7 are identified by the same reference symbols and names and will not be described repetitively.

An operation at start-up of the fuel cell system of the present embodiment may be identical to the operation at start-up of the fuel cell system 200 except that in Fig. 8, a step of heating the water inside of the ammonia removing device 5 by the heater 6 is inserted, before step S205 in which supplying of the hydrogen-containing gas from the hydrogen generator 2 to the fuel cell 7 starts, i.e., for example, before step S201, between Step S201 and Step S202, or between Step S202 and Step S203. Therefore, the operation at start-up of the fuel cell system of the present embodiment will not be described in detail repetitively.

In the present embodiment, the ammonia removing device 5 is heated by the heater 6 at start-up, and therefore the humidified state of the hydrogen-containing gas passing through the ammonia removing device 5 can be improved. Therefore, in the present embodiment, the humidified state of the hydrogen-containing gas at start of the power generation in the fuel cell system can be further improved as compared to a case where no heating means is provided.

Although the ammonia removing device 5 is provided at the portion of the first gas passage 57 which is located between the branch portion X and the hydrogen generator 2 as described above, the ammonia removing device 5 provided with the heater 6 may be provided at the branch portion X like Modified example 1 of Embodiment 1, or at the portion of first gas passage 57 which is located between the branch portion X and the fuel cell 7 like Modified example 2 of Embodiment 1.

Although the temperature detector 33 is provided at the portion of the first gas passage 57 which is located downstream of the ammonia removing device 5 as described above, the temperature detector 33 provided at the ammonia removing device 5 may detect the temperature of the ammonia removing device 5 like Modified example 1 and Modified example 2 of Embodiment 2.

### [Modified example 1]

A step of heating the water inside of the ammonia removing device in the operation method of the fuel cell system of Modified example 1 of Embodiment 3 may include a step of heating water inside of a recovered water tank and a step of supplying the heated water from the recovered water tank to the ammonia removing device.

Herein, the recovered water is defined as water obtained by recovering the water from gases discharged from fuel cell power generation units. The fuel cell power generation units include a combustor or the like as well as the fuel cell. The gases discharged from the fuel cell power generation units include an oxidizing off-gas, a fuel off-gas, a combustion exhaust gas, etc..

The operation method of the fuel cell system of the present modified example may be identical to any one of the operation methods of the fuel cell systems of Embodiment 1, modified examples of Embodiment 1, Embodiment 2, modified examples of Embodiment 2, and Embodiment 3, except for the above feature.

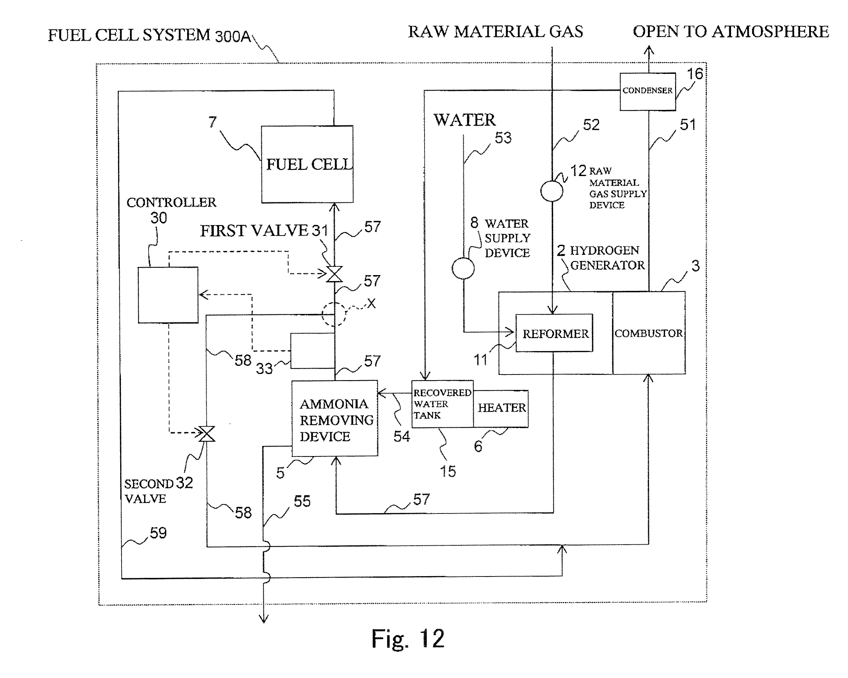

Fig. 12 is a block diagram showing an exemplary schematic configuration of a fuel cell system according to Modified example 1 of Embodiment 3. Hereinafter, a system configuration of the fuel cell system according to Modified example 1 of Embodiment 3 will be described with reference to Fig. 12.

As shown in Fig. 12, a fuel cell system 300A of the present modified example includes a heater 6, a recovered water tank 15 and a condenser 16.

The heater 6 is provided at the recovered water tank 15 to heat the water inside of the recovered water tank 15. The heater 6 is constituted by, for example, an electric heater connected to an outside electric power supply, etc.. The heater 6 may be communicatively connected to the controller 30 and controlled by the controller 30. The water is supplied from the recovered water tank 15 to the ammonia removing device 5. Therefore, it may be said that the heater 6 indirectly heats the water inside of the ammonia removing device 5.

The recovered water tank 15 is a tank for storing the recovered water supplied from the condenser 16. The recovered water tank 15 supplies the recovered water to the ammonia removing device 5 via the water passage 54.

The condenser 16 condenses the water contained in the gas discharged from the combustor 3.

The condenser 16 may be configured to condense the water in the gas discharged from the fuel cell 7. In this case, for example, the condenser 16 is provided at the off-gas passage 59. Or, the condenser 16 may be provided at both of the combustion exhaust passage 51 and the off-gas passage 59.

The fuel cell system 300A of the present modified example may be identical in configuration to the fuel cell system 200 of Fig. 7 except for the above configuration. Therefore, in Fig. 12, the same components as those of Fig. 7 are identified by the same reference symbols and names and will not be described repetitively.

The operation at start-up of the fuel cell system of the present modified example may be identical to the operation at the start-up of the fuel cell system 200 except that in Fig. 8, a step of heating the water inside of the recovered water tank 15 by the heater 6 and a step of supplying the heated water from the recovered water tank 15 to the ammonia removing device 5 are inserted before step S205 in which supplying of the hydrogen-containing gas from the hydrogen generator 2 to the fuel cell 7 starts, i.e., before step S204. Therefore, the operation at start-up of the fuel cell system 300A will not be described in detail repetitively.

Although the heater 6 for heating the water inside of the recovered water tank 15 is provided at the recovered water tank 15 as described above, it may be provided at least either one of a cooling water tank for storing cooling water for cooling the fuel cell 7 and a cooling water circulating passage through which the cooling water is circulated between this cooling water tank and the recovered water tank 15, in a fuel cell system including the cooling water tank and the cooling water circulating passage. In this case, the fuel cell system may be configured such that before Step S204, the heater 6 is actuated while circulating the cooling water within the cooling water circulating passage to increase the temperature of the water inside of the recovered water tank 15, and the water with the increased temperature is supplied from the recovered water tank 15 to the ammonia removing device 5.

### (Embodiment 4)

An operation method of a fuel cell system of Embodiment 4 includes a step of supplying the water inside of the ammonia removing device to the hydrogen generator in the operation method of the fuel cell system according to at least one of Embodiment 1 to Embodiment 3.

In such a configuration, an amount of the hydrogen consumed by generation of the ammonia is reduced. Therefore, an efficiency of generation of the hydrogen is improved as compared to a case where the water is not supplied from the ammonia removing device to the hydrogen generator.

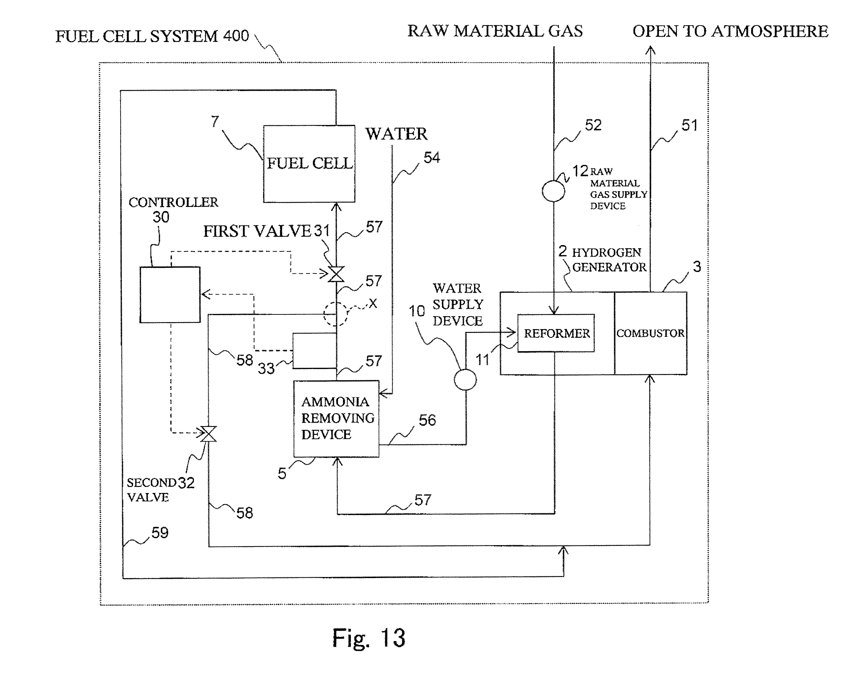

Fig. 13 is a block diagram showing an exemplary schematic configuration of a fuel cell system according to Embodiment 4 of the present invention. A fuel cell system 400 of Embodiment 4 is configured such that the water supply device 8, the reforming water passage 53 and the water discharge passage 55 are omitted from the fuel cell system 200 of Embodiment 2, a discharged water supply passage 56 via which the ammonia removing device 5 and the reformer 11 are communicated with each other is provided in the fuel cell system 400, and the discharged water supply passage 56 is provided with a water supply device 10. In the fuel cell system 400, the same components as those of the fuel cell system 200 are identified by the same reference symbols and names and will not be described repetitively.

The discharged water supply passage 56 is a passage through which the water discharged from the ammonia removing device 5 is supplied to the reformer 11. In the case of using the ammonia removing device of the absorbing tower type of Fig. 2, the ammonia removing device of the bubble tower type of Fig. 3, etc., the discharged water supply passage 56 can be connected to a location to which the water discharge passage 55 is connected in the examples of Figs. 2 and 3.

The water supply device 10 may be constituted by, for example, a water pump, and suctions water staying inside of the ammonia removing device 5 and supplies the water to the reformer 11.

Inside of the reformer 11, a reaction in which the nitrogen and the hydrogen react each other to generate the ammonia and a reaction in which the ammonia is decomposed to generate the nitrogen and the hydrogen are in a chemical equilibrium state. If the water supplied to the reformer 11 contains the ammonia, the chemical equilibrium shifts to a state under which the ammonia is decomposed to generate the nitrogen and the hydrogen, due to an increase in a concentration of the ammonia. Therefore, an absolute amount of the ammonia generated in the fuel cell system can be lessened.

In a case where the fuel cell system of the present embodiment further includes a second ammonia removing device for removing the ammonia from the water discharged from the ammonia removing device 5, at least one of a capacity and change frequency of the second ammonia removing device can be reduced in the present embodiment. As the second ammonia removing device, for example, a container filled with an ion exchange resin is used.

Since in the present embodiment, the water containing the ammonia is supplied to the hydrogen generator, an amount of the ammonia generated in the hydrogen generator is reduced due to a reaction equilibrium, as compared to a case where the water is not supplied from the ammonia removing device to the hydrogen generator. Since in the present embodiment, the amount of the hydrogen consumed by generation of the ammonia is thus reduced, a generation efficiency of the hydrogen is improved as compared to the case the water is not supplied from the ammonia removing device to the hydrogen generator.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

As described above, the fuel cell system of the present invention can optimize the operation method in a case where the ammonia removing device is provided in the fuel cell system provided with the bypass passage, and therefore is useful.

### Reference Signs Lists

| | |
|---|---|
| 1 | fuel reforming system |
| 2 | hydrogen generator |
| 3 | combustor |
| 5 | ammonia removing device |
| 5a | filling material |
| 5b | filling material fastening member |
| 5c | water storage section |
| 6 | heater |
| 7 | fuel cell |
| 8 | water supply device |
| 9 | cell stack |
| 10 | water supply device |
| 11 | reformer |
| 12 | raw material gas supply device |
| 13 | water supply device |
| 14 | water tank |
| 15 | recovered water tank |
| 16 | condenser |
| 21 | bubbling tank |
| 30 | controller |
| 31 | first valve |
| 32 | second valve |
| 33 | temperature detector |
| 51 | combustion exhaust gas passage |
| 52 | raw material gas passage |
| 53 | reforming water passage |
| 54 | water passage |
| 55 | water discharge passage |
| 55a | water discharge valve |
| 56 | discharged water supply passage |
| 57 | first gas passage |
| 58 | second gas passage |
| 59 | off-gas passage |
| 100 | fuel cell system |
| 200 | fuel cell system |
| 300 | fuel cell system |
| 400 | fuel cell system |

## Claims

1. A method of operating a fuel cell system, comprising the steps of:
generating a hydrogen-containing gas from a gas containing at least one of a nitrogen gas and a nitrogen compound, by a hydrogen generator;
removing ammonia from the hydrogen-containing gas;
detecting a temperature of the hydrogen-containing gas from which the ammonia has been removed; and
starting supplying of the hydrogen-containing gas from the hydrogen generator to the fuel cell, when the detected temperature of the hydrogen-containing gas is equal to or higher than a predetermined threshold.

2. The method of operating the fuel cell system, according to Claim 1,
wherein the step of removing the ammonia from the hydrogen-containing gas is a step of causing the hydrogen-containing gas to contact water.

3. The method of operating the fuel cell system, according to Claim 2,
wherein the step of removing the ammonia from the hydrogen-containing gas is a step of flowing the water and the hydrogen-containing gas through a gap formed by a filling material and causing the hydrogen-containing gas and the water to contact each other on a surface of the filling material.

4. The method of operating the fuel cell system, according to Claim 2,
wherein the step of removing the ammonia from the hydrogen-containing gas is a step of bubbling the hydrogen-containing gas in the water stored in a water storage section.

5. The method of operating the fuel cell system, according to any one of Claims 1 to 4,
wherein the step of removing the ammonia from the hydrogen-containing gas is a step of removing the ammonia from the hydrogen-containing gas flowing through at least one of a branch portion at which a second gas passage connected to a combustor for heating the hydrogen generator branches from a first gas passage via which the hydrogen generator and the fuel cell are communicated with each other, and a portion of the first gas passage which is located between the branch portion and the hydrogen generator.

6. The method of operating the fuel cell system, according to Claim 5,
wherein the step of detecting the temperature of the hydrogen-containing gas from which the ammonia has been removed is a step of detecting a temperature of the hydrogen-containing gas flowing through a gas passage located downstream of the ammonia removing device.

7. The method of operating the fuel cell system, according to Claim 5,
wherein the step of detecting the temperature of the hydrogen-containing gas from which the ammonia has been removed is a step of detecting a temperature of the ammonia removing device.

8. The method of operating the fuel cell system, according to any one of Claims 1 to 4,
wherein the step of removing the ammonia from the hydrogen-containing gas is a step of removing the ammonia from the hydrogen-containing gas flowing through a portion of the first gas passage which is located between the fuel cell and a branch portion at which a second gas passage connected to a combustor for heating the hydrogen generator branches from a first gas passage via which the hydrogen generator and the fuel cell are communicated with each other.

9. The method of operating the fuel cell system, according to Claim 8,
wherein the step of detecting the temperature of the hydrogen-containing gas from which the ammonia has been removed is a step of detecting a temperature of the ammonia removing device.

10. The method of operating the fuel cell system, according to any one of Claims 1 to 9, further comprising the step of:
heating water inside of the ammonia removing device before supplying of the hydrogen-containing gas from the hydrogen generator to the fuel cell starts.

11. The method of operating the fuel cell system, according to Claim 10,
wherein the step of heating the water inside of the ammonia removing device is a step of heating the water inside of the ammonia removing device by a heater provided at the ammonia removing device.

12. The method of operating the fuel cell system, according to Claim 10,
wherein the step of heating the water inside of the ammonia removing device includes the steps of:
heating water inside of a recovered water tank; and
supplying the heated water from the recovered water tank to the ammonia removing device.

13. The method of operating the fuel cell system, according to any one of Claims 1 to 12, further comprising the step of:
supplying water inside of the ammonia removing device to the hydrogen generator.
